**Europäisches Patentamt**

**European Patent Office**

**Office européen des brevets**

(19)

(11) Numéro de publication : **0 520 920 A1**

## (12) DEMANDE DE BREVET EUROPEEN

(21) Numéro de dépôt : **92460019.0**

(22) Date de dépôt : **25.06.92**

(51) Int. Cl.[5] : **C02F 1/44,** B01D 61/02

(30) Priorité : **26.06.91 FR 9108138**
**23.07.91 FR 9109620**

(43) Date de publication de la demande :
**30.12.92 Bulletin 92/53**

(84) Etats contractants désignés :
**CH DE DK ES GB IT LI**

(71) Demandeur : **SOCIETE DE TRAITEMENTS**
**HYDREX S.N.C.**
**45 rue Senouque**
**F-78530 Buc (FR)**

(72) Inventeur : **Corsin, Pierre**
**9 rue de l'Etang**
**F-78150 Rocquencourt (FR)**

(74) Mandataire : **Corlau, Vincent**
**c/o Cabinet Patrice Vidon Immeuble**
**Germanium 80 avenue des Buttes de**
**Coesmes**
**F-35700 Rennes (FR)**

(54) **Module de filtration, notamment pour le traitement des eaux.**

(57) Le module de filtration de l'invention est constitué d'une première membrane (61) choisie dans le groupe constitué par les membranes de microfiltration, d'ultrafiltration et de nanofiltration présentant un premier pouvoir de coupure, couplée à au moins une seconde membrane d'osmose inverse(71, 81) présentant un second pouvoir de coupure supérieur audit premier pouvoir de coupure, ladite seconde membrane (71, 81) étant montée en "série-rejet" en aval de ladite première membrane 61, le filtrat général (90) produit par ledit module de filtration formé par la conjonction des filtrats 62, 70) issus le l'ensemble desdites membranes (61, 71, 81).

EP 0 520 920 A1

Le domaine de l'invention est celui des installations de filtration et d'épuration de liquides, notamment pour le traitement des eaux.

L'installation de filtration de l'invention s'applique plus particulièrement, mais de façon non exhaustive, au traitement des eaux du type susceptible de présenter une grande variabilité de qualité, notamment aux eaux de surface ou de caractéristiques équivalentes. Toutefois, l'homme du métier pourra envisager d'en utiliser le principe pour la filtration des eaux usées ou brutes à d'autres étapes de la chaîne d'épuration, ou encore pour la filtration d'autres liquides.

Le traitement des eaux de surface est mis en oeuvre tant pour clarifier des eaux d'écoulement ou de rejet alimentant un réservoir naturel (nappes, fleuves et rivières, ...), que pour assurer directement la distribution d'eaux de consommation. Compte tenu des normes aujourd'hui en vigueur, le traitement a les objectifs principaux suivants:

- éliminer les matières en suspension,
- éliminer les matières organiques,
- éliminer les ions indésirables,
- stériliser.

Parmi les polluants organiques et/ou ioniques à éliminer, on trouve des hydrocarbures, ainsi que certains composés organohalogénés. Une circulaire de la Direction Générale de la Santé adressée aux préfets de région et de département en date du 16 mai 1989 souligne ainsi que la présence de composés organohalogénés volatils a été mise en évidence à partir des années 70 dans les eaux traitées destinées à la consommation humaine. Du trichloréthylène a aussi été identifié dans des nappes. Selon cette circulaire, les travaux menés dans différents pays, notamment en France, pour mieux connaître ces produits et les risques associés ont abouti à l'élaboration de normes et recommandations :

- la directive CEE 80/778 du 15 juillet 1980 du Conseil des Communautés Européennes comporte une recommandation générale présentée sous la forme "autres composés organochlorés ne relevant pas du paramètre n° 55 : niveau guide : 1 microgramme par litre ; la concentration en haloformes doit être réduite dans toute la mesure du possible".
- les dispositions publiées en 1984 par l'Organisation Mondiale de la Santé sur la qualité des eaux destinées à la consommation humaine comportent des valeurs guides devant permettre aux états Membres de fixer des teneurs limites nationales pour certains produits.

Selon l'Organisation Mondiale de la Santé, les valeurs suivantes sont notamment recommandées comme concentrations limites de ces produits dans les eaux destinées à la consommation humaine :

- tétrachlorure de carbone :       ..... 3 microgrammes par litre
- 1,2 dichloroéthane :       ..... 10 microgrammes par litre
- tétrachloroéthylène :       ..... 10 microgrammes par litre
- trichoréthylène :       ..... 30 microgrammes par litre
- chloroforme :       ..... 30 microgrammes par litre
- chlorométhane :       ..... 30 microgrammes par litre

Une chaîne de traitement classique comprend la plupart du temps une succession d'étapes physico-chimiques du type coagulation-floculation/décantation/filtration (notamment filtration sur sable).

A la suite de l'opération de filtration, l'eau est ensuite classiquement débarrassée des micro-organismes pathogènes, des micropolluants, des métaux lourds à l'état de trace, et des mauvais goûts et saveurs à l'aide d'oxydants (ozone, chlore...) ou de rayonnements (U.V), couplés généralement à un traitement d'affinage au charbon actif en grains ou en poudre.

Pour l'élimination des micropolluants, il existe également d'autres traitements particuliers, tels que par exemple le stripping (aération forcée) ou encore le filtrage dans un sable formé de billes de résine chargées électriquement, jouant le rôle de capteurs d'ions. Ces sables présentent un grand intérêt pour l'adoucissement de l'eau (décarbonatation, désulfatation, ...) mais sont peu efficaces vis-à-vis par exemple des chlorures, ou encore des matières organiques.

On connaît également des modules de filtration réalisés à l'aide de membranes, à savoir :
- les membranes de microfiltration,
- les membranes d'ultra filtration,
- les membranes de nanofiltration,
- les membranes d'osmose inverse.

La membrane de nanofiltration est définie par exemple comme une membrane ayant un pouvoir de coupure permettant de retenir la micropollution organique (pouvoir de coupure (rejet à plus de 95 %) de l'ordre de 1 nm à 10 nm environ, 1 nm correspondant à des poids moléculaires de l'ordre de 200 environ); les membranes d'osmose inverse permettent de retenir les ions (pouvoir de coupure de 100 Å à 1 nm environ).

Ces membranes sont généralement utilisées indépendamment l'une de l'autre, un seul type de membrane étant utilisé dans une installation de filtration donnée.

L'invention présente une nouvelle configuration pour une installation de filtration, permettant d'utiliser plusieurs types de membranes dans la même installation.

Selon l'invention, la nouvelle configuration de module de filtration est constituée d'une première membrane choisie dans le groupe constitué par les membranes de microfiltration, d'ultrafiltration et de nanofiltration présentant un premier pouvoir de coupure, couplée à au moins une seconde membrane d'osmose inverse présentant un second pouvoir de coupure supérieur audit premier pouvoir de coupure, ladite seconde membrane étant montée en "série-rejet" en aval de ladite première membrane, le filtrat général produit par ledit module de filtration étant formé par la conjonction des filtrats issus de l'ensemble desdites membranes.

On connaît déjà de l'abrégé du brevet japonais JP-A-54 31088 une unité de filtration faisant intervenir un montage en "série-rejet" de plusieurs membranes. Cependant, ce montage particulier ne s'applique, dans la technique divulguée par ce document, qu'à des membranes de même nature, à savoir des membranes d'osmose inverse. Il ne concerne donc nullement une combinaison de membranes de natures différentes, telles qu'une membrane de microfiltration, d'ultrafiltration ou de nanofiltration, combinée à au moins une membrane d'osmose inverse.

De plus, l'unité de filtration décrite dans ce document fait intervenir un montage en "série-rejet" de plusieurs membranes d'osmose inverse mais ne précise pas que le pouvoir de coupure de la première de ces membranes est inférieur au pouvoir de coupure de la deuxième membrane et que le pouvoir de coupure de cette deuxième membrane est lui-même inférieur au pouvoir de coupure de la troisième membrane. La caractéristique selon laquelle les pouvoirs de coupure des différentes membranes vont croissants est un élément essentiel de la présente invention puisqu'elle contribue à obtenir à meilleure élimination des micropolluants.

On connaît également dans l'état de la technique, plusieurs méthodes consistant à utiliser au cours de procédés de traitement de l'eau, d'une part un étape de filtration par ultrafiltration ou nanofiltration et d'autre part une étape de filtration par osmose inverse.

Ainsi, la demande de brevet française FR-A-2180478 décrit un procédé de déminéralisation de l'eau faisant intervenir une première étape d'ultrafiltration et une seconde étape de filtration par osmose inverse. Ces deux types de filtration sont menées de façon indépendante, le filtrat issu de l'ultrafiltration étant transféré dans un récipient puis introduit dans une unité d'osmose inverse.

Il ne s'agit donc dans ce cas que de la juxtaposition de deux techniques de filtration différentes et non d'une combinaison particulière de ces deux techniques selon un montage des membranes en "série-rejet".

De plus, la technique divulguée dans ce document aboutit à une déminéralisation particulièrement poussée de l'eau, alors que l'invention divulgue une technique visant à proscrire une forte déminéralisation de celle-ci, l'eau trop fortement déminéralisée étant impropre à la consommation.

L'article intitulé "Separation potential of nanofiltration membranes" paru dans la revue *Desalination*, volume 77, n° 1-3 en mars 1990, décrit quant à lui une technique associant nanofiltration et osmose inverse pour décontaminer les eaux souillées par des solvants organiques. Selon cette technique, l'eau subit une première filtration sur membrane de nanofiltration et le filtrat issu de cette première étape subit ensuite une filtration par osmose inverse.

Aucune des techniques connues de l'état de l'art n'associait donc jusqu'ici une membrane de microfiltration, d'ultrafiltration ou de nanofiltration et une ou plusieurs membranes d'osmose inverse selon un montage en "série-rejet", permettant d'obtenir un filtrat général formé par la conjonction des filtrats issus de l'ensemble des membranes.

Or cet agencement particulier présente, dans le cas de membranes de natures différentes telles que d'une part une membrane de microfiltration, de nanofiltration ou d'ultrafiltration et d'autre part une membrane d'osmose inverse, des avantages particulièrement intéressants.

Ainsi, en récupérant l'énergie hydraulique du concentrat issu de l'unité de microfiltration, d'ultrafiltration ou de nanofiltration, on peut réaliser des économies d'énergie pour amener ce concentrat à une pression compatible avec le traitement par osmose inverse.

Par ailleurs, ce type d'agencement permet d'améliorer grandement le rendement d'élimination des micropolluants retenus par les membranes. Ainsi, l'atrazine peut être éliminée à plus de 70 % alors que les techniques de l'état de l'art ne permettait jusqu'alors qu'une élimination de l'ordre de 50 %. Cette amélioration permet d'éviter d'avoir recours en fin de traitement à une opération supplémentaire faisant généralement intervenir des oxydants tels que l'ozone ou l'eau oxygénée ou encore un traitement sur charbon actif. La suppression des installation nécessaires à de tels post-traitements entraîne une économie substantielle sur les coûts des chaînes de traitement des eaux.

Selon une variante particulièrement intéressante, ladite première membrane est une membrane de nanofiltration présentant préférentiellement un pouvoir de coupure de l'ordre de 200-300 (poids moléculaire).

Egalement avantageusement, ladite membrane de nanofiltration est utilisée à faible pression, de l'ordre

EP 0 520 920 A1

de 4 à 30 bar, préférentiellement 5 à 10 bar.

Selon un mode de réalisation préférentielle, ladite membrane d'osmose inverse est utilisée à une pression de l'ordre de 15 à 30 bar.

Egalement avantageusement, une pompe induisant un différentiel de pression est intercalée entre ladite première membrane et ladite seconde membrane.

L'invention s'applique notamment avantageusement à une chaîne de traitement des eaux de surface à barrière de sécurité, telles que décrites dans la demande de brevet française principale dont est issue la présente demande de brevet divisionnaire

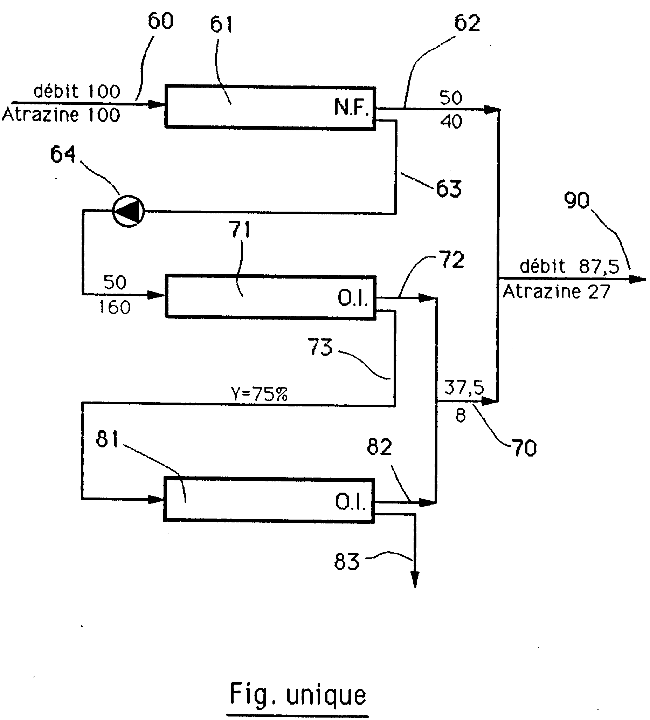

D'autres caractéristiques et avantages de l'invention apparaîtront à la lecture de la description suivante d'un mode de réalisation préférentiel de l'invention donné à titre illustratif et non limitatif et de la figure unique annexée schématisant un mode de réalisation particulier du module de filtration de l'invention, constitué d'une membrane de nanofiltration associée à deux membranes d'osmose inverse en série-rejet.

Comme représenté sur la figure, l'agencement de l'invention consiste à utiliser une membrane de nanofiltration tangentielle, formant un premier étage de filtration, et à la faire suivre d'au moins une membrane d'osmose inverse montée en "série-rejet" en aval de ladite membrane de nanofiltration. Le filtrat issu de la barrière de sécurité est ensuite constitué de la jonction des filtrats issus de l'ensemble des membranes de nanofiltration et d'osmose inverse.

Plus précisément, dans le mode de réalisation représenté, une membrane de nanofiltration 61 reçoit en entrée une eau à traiter 60, et fournit un filtrat 62 et un concentrat 63. Le concentrat 63 est pompé à l'aide de la pompe 64 en direction d'une première membrane d'osmose inverse 71, qui fournit un filtrat 72 et un concentrat 73. Le concentrat 73 est à son tour dirigé vers une seconde membrane d'osmose inverse 81, produisant un filtrat 82 et un concentrat 83.

La barrière de sécurité ainsi constituée fournit un filtrat total 90 constitué de la conjonction des filtrats 62, 72 et 82 provenant des membranes 61, 71 et 81. Le concentrat général 83 est évacué par exemple vers une unité de traitement ultérieur.

La membrane de nanofiltration 61 est du type présenté plus haut. Les membranes d'osmose inverse 71 et 81 peuvent avantageusement être du même principe général de constitution que la membrane de nanofiltration 61, mais avec des caractéristiques mécaniques et un pouvoir de coupure permettant un fonctionnement osmotique plus poussé.

La membrane de nanofiltration est définie par exemple comme une membrane ayant un pouvoir de coupure permettant de retenir la micropollution organique (pouvoir de coupure (rejet à plus de 95 %) de l'ordre de 1 nm à 10 nm environ, 1 nm correspondant à des poids moléculaires de l'ordre de 200 environ); les membranes d'osmose inverse permettent de retenir les ions (pouvoir de coupure de 100 Å à 1 nm environ).

Toutefois, plus généralement, l'agencement de la figure annexée convient dans la mesure où le premier étage 61 présente un pouvoir de coupure inférieur aux étages suivants 71, 81.

L'agencement ainsi présenté comporte un premier avantage sous l'angle des pressions d'alimentation. La membrane de nanofiltration 61 est par exemple alimentée sous 8 bar environ. Du fait des pertes de charge dans la chambre d'alimentation de la membrane 61, le concentrat 63 se trouve à une pression un peu inférieure, par exemple de l'ordre de 6,5 bar. Pour monter la pression du concentrat jusqu'à une valeur compatible avec le traitement osmotique dans les membranes 71, 81, il suffit alors d'une pompe 64 induisant un différentiel de pression de 8,5 bar environ pour atteindre les 15 bar environ nécessaires à l'osmose inverse.

On réalise ainsi une économie d'énergie électrique du fait de la récupération de l'énergie hydraulique du concentrat 63 de l'étage de nanofiltration 61.

Cet agencement permet d'améliorer le rendement d'élimination des micropolluants retenus dans ce type de membrane. Ainsi, si on prend le cas des pesticides (atrazine, ...) ou du fluor, dont le taux d'abattement est d'environ 60 % en nanofiltration, et si l'on considère que chacune des membranes 61, 71, 81 présente un facteur de conversion de l'ordre de 50 % (cas de tubes à six éléments), on obtient successivement les débits et les concentrations en atrazine suivants:

- pour un débit 100 et une concentration en atrazine 100 en entrée de la membrane de nanofiltration 61, on obtient un filtrat 62 de débit 50 et de concentration 40, en appliquant une valeur de 50 % pour le facteur de conversion de l'étage, et une valeur de 60 % pour le taux d'abattement de l'atrazine ;

- en entrée du second étage 71, le débit vaut également 50 (débit du concentrat 63), et la concentration en atrazine est montée à 160. Si l'on considère un taux d'abattement de l'atrazine de l'ordre de 95 % sur l'ensemble des deux étages de membranes d'osmose inverse 71 et 81, avec un facteur de conversion global de l'ordre de 75 %, on obtient un filtrat global 70 de débit 37,5, et de concentration 8. Le concentrat général 83 présente un débit de 12,5.

La conjonction du filtrat 62 de la membrane de nanofiltration 61, et du filtrat 70 des deux étages d'osmose inverse 71, 81 fournit alors un filtrat général 90 de débit 87,5, avec une concentration en atrazine valant 27.

4

En d'autres termes, on a réalisé une barrière de sécurité présentant un facteur de conversion global de 87,5 %, avec un taux d'abattement d'atrazine de 73%, ce qui correspond à une amélioration de près de 22 % du taux d'abattement par rapport à l'utilisation d'un étage unique de nanofiltration 61.

Cette configuration est également avantageuse par rapport à une technique consistant à n'utiliser que l'osmose inverse. En effet, l'agencement de la figure annexée permet de ne pas trop déminéraliser le perméat, du fait de la présence du filtrat de nanofiltration 62.

En outre, cet agencement permet d'optimiser l'étage de nanofiltration 61, en lui conférant un faible taux de conversion, ce qui permet d'améliorer le taux d'abattement des micropolluants. Le fait de prévoir une nanofiltration sur un seul étage permet également d'ajuster la pression d'alimentation à la valeur juste nécessaire pour l'étage, et non pas pour l'alimentation d'autres étages. De même, le fait de prévoir deux étages 71, 81 d'osmose inverse permet de les alimenter à l'aide d'une pompe complémentaire 64 unique.

Enfin, le traitement ainsi réalisé permettra généralement d'éviter un post-traitement final (classiquement $H_2O_2$ et/ou $O_3$ et/ou CAG), du fait de l'amélioration du taux d'abattement.

Au total, le nouveau module de filtration ainsi présenté ne correspond plus ni à de la nanofiltration, ni à de l'osmose inverse, mais à une technique séparative intermédiaire.

Dans tous les cas, le perméat est de qualité au moins égale à celui résultant d'une simple opération de nanofiltration.

Pour faire travailler les membranes de nanofiltration dans de bonnes conditions, il est important de donner un objectif de qualité stricte à l'installation de prétraitement située en amont. Notamment, au moins l'une des deux conditions suivantes doit avantageusement être respectée, en régime courant :
- le colmatage (fouling) doit être inférieur à 3 environ (Silt Density Index : Index de Densité de Dépôt) ; ce critère est le critère principal ;
- la turbidité de l'eau en entrée de la membrane doit être inférieure à 0,3 environ (Nephelometry Turbidity Unit : Unité de Turbidité Néphélométrique).

Ceci suppose de maîtriser correctement le prétraitement. Le colmatage de membrane est en effet notamment causé par des particules et des composants colloïdaux, qui se concentrent à la surface de la membrane, et ne peuvent être éliminés que par nettoyage chimique.

Les membranes de nanofiltration sont par exemple vendues sous la dénomination FILMTEC (marque déposée) par la société américaine Dow Chemical. A titre d'exemple, les références NF40, ou encore NF70 sont utilisables.

Un type de membrane utilisable dans l'invention est aussi notamment décrit dans les documents de brevet des Etats-Unis d'Amérique USP 4259183, USP 4765847 et USP 4824574.

Ce type de membrane, lorsqu'il est utilisé pour mettre en oeuvre des procédés d'osmose inverse, est utilisé sous des pressions relativement importantes (de l'ordre de 30 bar). Une application classique est le dessalage d'eau de mer, l'objectif étant principalement de filtrer les composantes à traiter.

Ces membranes sont généralement chargées électriquement négativement et jouent un rôle répulsif vis-à-vis des cations contenus dans le liquide à traiter.

Le module de filtration de la figure annexée permet également par exemple de lutter contre la micropollution radioactive.

La pollution radioactive, notamment la pollution par le radon, est essentiellement concentrée sur les colloïdes. En conséquence, une membrane de nanofiltration utilisée comme barrière de sécurité constitue une protection efficace, par rétention des particules radioactives. Ce procédé est notamment beaucoup plus sûr que la filtration par Charbon Actif en Grains, qui relargue lentement la pollution radioactive après avoir joué le rôle de barrière.

Une autre application spécifique avantageuse est l'élimination de carbone organique dissous biodégradable. Dans les traitement classiques par la filière ozone-charbon, la lutte contre la pollution organique s'organise de la façon suivante : l'ozone casse les grosses molécules organiques, et le Charbon Actif en Grains retient les chaînes moléculaires résultantes. Toutefois, il reste toujours du carbone organique résiduel en sortie de filière. L'utilisation d'une membrane de nanofiltration constitue une barrière de sécurité efficace pour la rétention de ce carbone organique résiduel.

Des essais comparatifs ont été menés, et ont fourni les résultats présentés ci-après.

| | PRETRAITEMENT PAR FILTRATION SUR SABLE | TRAITEMENT COMPLE-MENTAIRE PAR NANOFILTRATION |
|---|---|---|
| COD total du filtrat (mg/l) | 2,9 | 0,3 |
| dont : COD Biodégradable (mg/l) | 0,6 | < 0,1 |
| dont : COD Réfractaire (mg/l) | 2,3 | 0,3 |

La première colonne fournit le taux de COD (Carbone Organique Dissous) mesuré sur une eau témoin traitée, en sortie d'une unité de traitement par filtration sur sable. L'analyse du filtrat permet de détecter un taux de 2,9 mg/l décomposé en 0,6 mg/l de COD biodégradable (analysé par test spécifique de biodégradabilité), et 2,3 mg/l de COD réfractaire (non biodégradable).

La même eau a ensuite subi un traitement complémentaire de nanofiltration. Le COD total en sortie de nanofiltration a baissé considérablement (0,3 mg/l), avec une disparition totale de COD biodégradable (< 0,1 mg/l, la limite de résolution du test de biodégradabilité). Ce résultat est extrêmement favorable, car le COD biodégradable est source de développement bactérien sur le réseau en aval de l'installation.

## Revendications

1. Module de filtration caractérisé en ce qu'il est constitué d'une première membrane (61) appartenant au groupe comprenant les membranes de microfiltration, d'ultrafiltration, de nanofiltration et présentant un premier pouvoir de coupure, couplée à au moins une seconde membrane (71, 81) d'osmose inverse présentant un second pouvoir de coupure supérieur audit premier pouvoir de coupure, ladite seconde membrane (71, 81) étant montée en "série-rejet" en aval de ladite première membrane (61), le filtrat général (90) produit par ledit module de filtration étant formé par la conjonction des filtrats (62, 70) issus de l'ensemble desdites membranes (61, 71, 81).

2. Module de filtration selon la revendication 1 caractérisé en ce que ladite première membrane est une membrane de nanofiltration.

3. Module de filtration selon la revendication 2 caractérisé en ce que ladite membrane de nanofiltration (61) est utilisée à faible pression, de 4 à 30 bar, préférentiellement 5 à 10 bar.

4. Module de filtration selon l'une des revendications 1 à 3 caractérisé en ce que ladite membrane d'osmose inverse est utilisée à une pression de l'ordre de 15 à 30 bar.

5. Module de filtration selon l'une quelconque des revendications 1 à 4 caractérisé en ce qu'une pompe (64) induisant un différentiel de pression est intercalée entre ladite première membrane (61) et ladite seconde membrane (71, 81).

Fig. unique

EP 0 520 920 A1

**Office européen**
**des brevets**

**RAPPORT DE RECHERCHE EUROPEENNE**

Numero de la demande

EP     92 46 0019

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | PATENT ABSTRACTS OF JAPAN vol. 3, no. 55 (C-45)11 Mai 1979 & JP-A-54 031 088 ( TORAY K.K. ) 7 Mars 1979 * abrégé; figure * | 1-5 | C02F1/44 B01D61/02 |
| Y | DESALINATION vol. 77, no. 1-3, Mars 1990, AMSTERDAM pages 73 - 84 , XP216600 R.RAUTENBACH ET AL. 'SEPARATION POTENTIAL OF NANOFILTRATION MEMBRANES' * page 73, alinéa 1 - page 74, alinéa 1 * * page 76, alinéa 2 -alinéa 3 * * tableau 2 * * page 84, ligne 5 - ligne 13 * * figure 12 * | 1-5 | |
| Y | FR-A-2 180 478 (SOCIÉTÉ DES USINES CHIMIQUES RHONE-POULENC) * page 2, ligne 5 - page 3, ligne 9 * * page 3, ligne 34 - page 4, ligne 25 * * revendications 1,4,5; figures 1,2 * | 4 | |
| A | | 1,2,5 | C02F B01D |
| A | DE-A-3 505 578 (KRAFTWERK UNION AG) * page 7, alinéa 2 - page 8, alinéa 1 * * figure 1 * | 1 | |

DOMAINES TECHNIQUES RECHERCHES (Int. Cl.5)

Le présent rapport a été établi pour toutes les revendications

| Lieu de la recherche | Date d'achèvement de la recherche | Examinateur |
|---|---|---|
| LA HAYE | 23 SEPTEMBRE 1992 | STEVNSBORG N. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

8